# EUROPEAN PATENT SPECIFICATION

(11) **EP 1 148 275 B1**
(45) Date of publication and mention of the grant of the patent: **21.01.2004**
(21) Application number: 01201451.0
(22) Date of filing: 11.04.2001
(51) Int. Cl.: F16H 61/44, F16D 25/0632

(54) **Transmission for industrial vehicles with two hydrostatic control motors**
Nutzfahrzeug Getriebe mit zwei steuerbaren hydrostatischen Motoren
Transmission pour véhicules industriels avec deux moteurs hydrostatiques commandés

(30) Priority: 19.04.2000 IT MI200876
(43) Date of publication of application: 24.10.2001
(73) Proprietor: Dana Italia S.p.A, 38062 Arco (Trento) (IT)
(72) Inventor: Panizzolo, Fabrizio, 35157 Padova (IT)
(74) Representative: Zanardo, Giovanni

(56) References cited:
- EP-A- 0 482 524
- WO-A-97/29308
- DE-A- 19 614 724
- US-A- 4 401 182
- US-A- 4 813 234
- PATENT ABSTRACTS OF JAPAN vol. 1999, no. 11, 30 September 1999 (1999-09-30) -& JP 11 166623 A (KOMATSU LTD), 22 June 1999 (1999-06-22)

## Description

The present invention refers to a transmission for industrial vehicles with two hydrostatic control motors.

Transmissions for industrial vehicles controlled by two hydrostatic motors are known in which the two motors, arranged parallel, act by means of relevant gears, keyed onto input shafts, on a control gear of the entire input control assembly towards at least one engine axle or towards a universal joint connecting this to an input flange of at least one engine axle not incorporated with the transmission. In particular, it must be noted that a first motor generally has a higher maximum torque than the second motor, and that these have different displacements.

During normal operation of the two parallel motors the oil supplied to both allows them to provide, by means of the control gear on which they act, a total maximum torque required for the working operations of the vehicle which has as its maximum envelope the sum of the maximum working torque of each motor. In this condition it is noted that the speed of the output shaft rotates at relatively low speeds, in any case, useful and sufficient to satisfactorily cover all the operating requirements of the vehicle.

On the contrary, when the industrial vehicle is to be transferred from one operating zone to another it must be possible to provide a high speed of the output shaft with a minimum operating torque. For this purpose, one of the motors, namely the one with the higher torque, is deactivated so that the transmission is operated by the motor with a lower torque only, which, as it receives a greater amount of oil, can rotate at higher speeds, helpful for rapid movement.

In existing transmissions of this type, when the hydrostatic motor with the higher torque is disengaged, during operation of the motor with a lower torque it is dragged in neutral and a splashing of oil occurs that penalizes operation of the entire transmission.

This causes low mechanical efficiency with consequent overheating of the oil.

A first solution attempted was to obtain disengagement from the motor with the higher torque by means of an oil bath clutch which, being fitted between the parts, if the motor was disengaged, would be subject to high dissipation of energy caused by the resistances and frictions caused by the oil, so-called "resistances or losses of ventilation". All this disturbs operation as, although allowing higher speeds to be reached as requested, it does not solve the problem of overheating due to dissipation of energy between stationary disks and counter-rotating disks of the disengaged clutch with a high relative variation in the number of revolutions.

Another solution was provided in generic US 4813234 disclosing a clutch comprising a swash plate in combination with a shaft flange integrally formed at the drive shaft. The swash plate is pivotally engaged with a cylinder by a plurality of pistons hydraulically activated. The clutch engaging/disengaging force is produced only by the hydraulic forces acting on the pistons.

The aim of the present invention is to create a transmission for industrial vehicles with two hydrostatic control motors of the type mentioned above in which the problems indicated above are eliminated.

Another aim is to create a transmission for industrial vehicles with two hydrostatic control motors in which operation of the motor with a lower torque alone is not negatively influenced by the presence of the second motor with higher torque.

A further aim of the present invention is to create a transmission for industrial vehicles with two hydrostatic control motors that permits a transfer speed of the vehicle on which it is fitted at the highest speeds possible, without frictions and oil splashing.

These aims according to the present invention are achieved by creating a transmission for industrial vehicles with two hydrostatic control motors as illustrated in claim 1.

Further characteristics of the invention are highlighted in the subsequent claims.

The characteristics and advantages of a transmission for industrial vehicles with two hydrostatic control motors according to the present invention shall become more evident in the description below, given merely as an unlimited example, referring to the schematic drawings annexed in which:
Figure 1 is a schematic front view of a transmission according to the invention illustrating with lines and dots the two control motors of the central shaft to operate the industrial vehicle with a central control shaft,
Figure 2 is an enlarged cross section through the transmission in figure 1 according to the line II-II in figure 1 including a transmission assembly between the motor with the higher rated torque and the relevant gear,
Figure 3 is a similar cross section to the one in figure 2 with an enlarged detail of the zone in which a dry clutch is located to disengage the motor with the higher rated torque, and

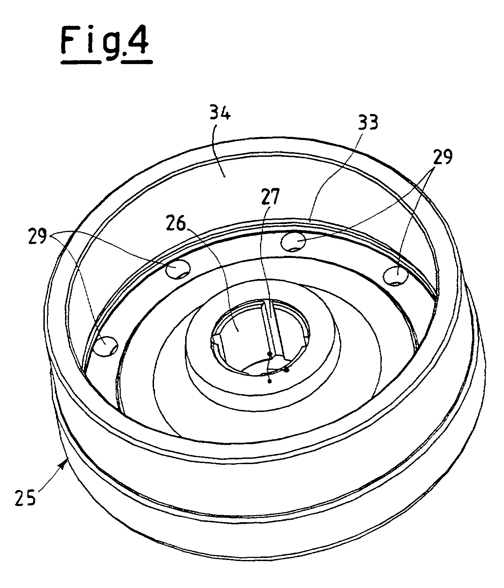

Figure 4 is a plan view of the clutch housing, the cross section of which is illustrated in figures 2 and 3.

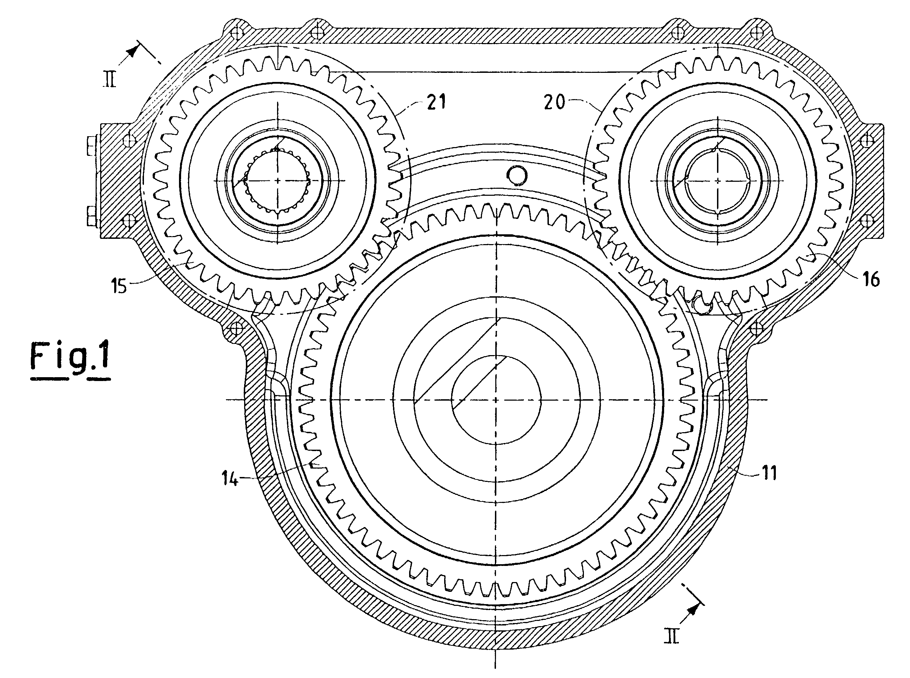

With reference firstly to figure 1, a general front view is shown schematically, with a partial cross section, of a transmission for industrial vehicles with two hydrostatic control motors according to the present invention. In particular, it can be noted that a load-bearing structure 11 centrally supports by means of bearings 12 an output shaft 13 to which is anchored a central control gear 14, to control the entire input assembly towards at least one engine axle or towards a universal joint connecting it to the input flange of at least one engine axle not incorporated with the transmission.

Engaged on this central gear 14 are two gears 15 and 16 that are anchored to shafts 17 supported by bearings 18, housed in seats 19 derived inside the load-bearing structure 11. These shafts 17 and relevant gears 15 and 16 are controlled during rotation by respective hydrostatic motors 20 and 21.

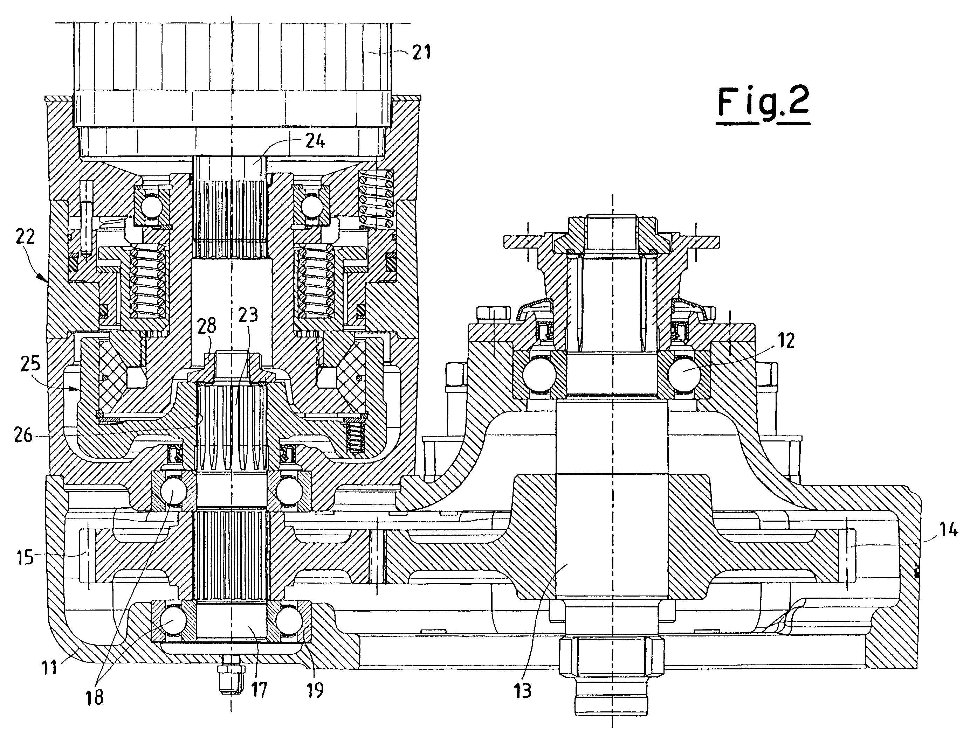

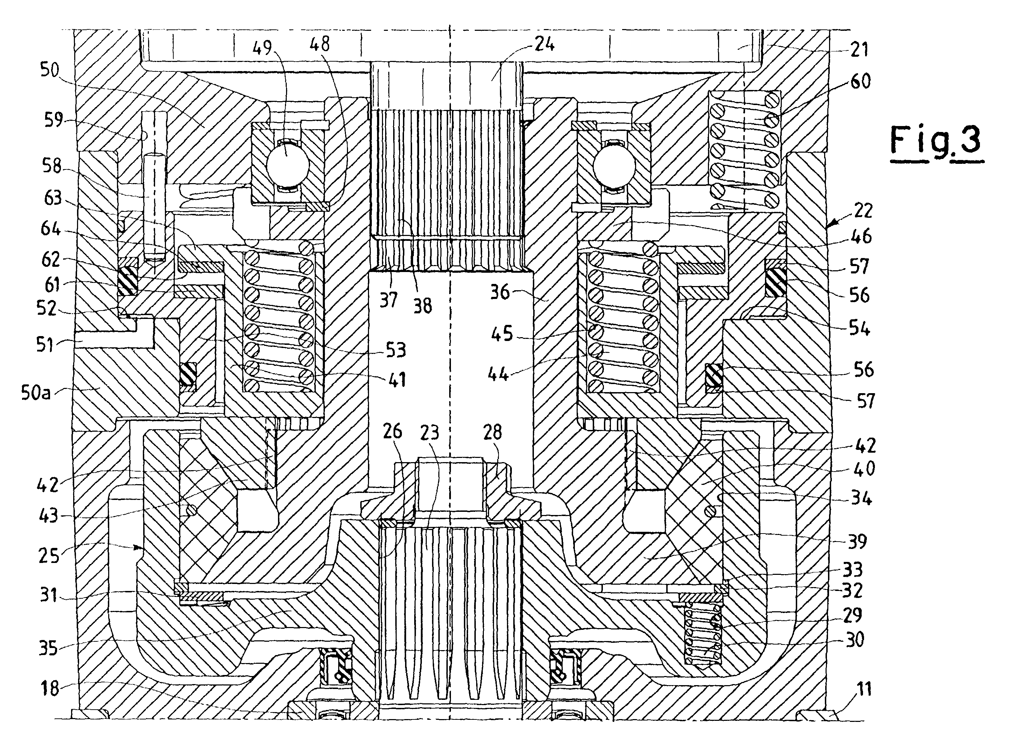

In particular, the motor 20 directly controls the gear 16 as this is connected rigidly to the shaft carrying it. The second motor 21 is instead connected to the shaft 17 by means of an interposed transmission assembly, indicated altogether with 22, illustrated in detail in the cross-sections in figures 2 and 3.

In particular, the motor 20 is a hydrostatic motor and is the one with a lower maximum rated torque, while the motor 21 is the one with the higher rated torque. The transmission assembly illustrated in figures 2 and 3 is the one that according to the present invention is fitted between the motor 21 with the higher operating torque and the shaft 17 with the gear 15.

According to the present invention, a transmission assembly 22 equipped with a dry friction clutch is fitted between the motor 21 and the shaft 17 with the relevant gear 15.

In fact, it can be noted in figures 2 and 3 fitted on a splined extension 23 of the shaft 17 facing the output shaft 24 of the motor 21, is a clutch housing, with a hole in the centre 26 and equipped with splines 27 complementary to those present on the splined extension 23. The assembled operating layout is created by means of a ring nut 28 that firmly blocks the clutch housing 25 to the extension 23 of the shaft 17.

Inside the clutch housing 25, in a central casing or hub 35 of this, a series of blind seats 29 are derived to hold elastic components, such as springs 30, that act on a gear ring 31. The gear ring 31 in turn rests on a spring ring 32 positioned in an annular recess 33 derived in a cylindrical internal surface 34 of the clutch housing 25. The spring ring 32 is placed loosely in the annular recess 33 and hence the springs 30 can disengage the parts of the clutch indicated below.

Fitted coaxially to the clutch housing 25 is a first rotating sleeve 36, equipped centrally with a toothed portion 37 that engages with an end portion 38 of the shaft 24 of the motor 21 which thus drags it in rotation. The end of the first rotating sleeve 36 facing the clutch housing 25 has a radial annular extension facing outwards 39 with a conical surface that engages with a series of conical friction sectors 40. These sectors are positioned between the radial annular extension 39 and one end of a second sleeve 41 coaxial with the first sleeve 36. It must be noted that the second sleeve 41 is positioned to slide axially externally to the first sleeve 36, although it is not free to rotate in relation to this as it is engaged by means of a splined bar connection 42, indicated in figure 3.

The second sleeve 41 is established so that a wedge shaped end 43 of it engages with the conical sectors 40 by means of springs 44 fitted in seats 45 derived in the opposite end of the second sleeve 41. These seats 45 are open toward the motor 21 so that the springs 44 react against a spacer 46 fitted on the external surface of the first sleeve 36 and held in position by a check ring 48 positioned inside a recessed annular seat 47 of this external surface.

Fitted below the check ring 48 is a bearing 49 that supports the rotating sleeve 36 in relation to a casing 50 of the interposed transmission assembly 22.

The invention also establishes that an area 50a of the casing 50 has a duct 51 facing outwards to supply an internal chamber 52 of variable dimension identified between an undercut 54 of this casing 50 and a piston 53. The piston 53 is fitted coaxially on the outside of the second sleeve 41 and can be moved in relation to this in an axial direction, although it is stationary and does not rotate.

Fitted inside seats on an external surface 55 of the piston 53 are gaskets 57 and grommets 56 which cooperate with the annular undercut 54 inside the casing 50 to create the seal. Moreover, one end of the piston 53 facing the motor 21 holds pins 58 that fit inside seats 59 in the casing 50 to prevent rotation and guide movement of the piston 53, acting against the springs 60. The piston 53 is hollow inside being fitted coaxial to the second sleeve 41 and holds, in an annular undercut, a friction ring 61. This friction ring 61 engages with a surface 62 derived in a flanged portion 63 created at one end of the second flange 41 facing the motor 21. This surface 62 may also have a friction ring 64, if deemed necessary.

Operation of the transmission of the present invention is described below.

When the transmission is used normally, both motors 20 and 21 operate to provide the total torque required for the working operations of the industrial vehicle.

In this case the transmission assembly 22 is in the position illustrated in the figures in which the dry friction clutch is in the engaged position between the shaft 24 of the motor 21 and the shaft 17 with the gear 15. Therefore, both motors 20 and 21 operate, the first 20 directly and the second 21 by means of the engaged position of the clutch.

When the work is finished, the vehicle requires to be moved to a different location in the shortest possible time.

For this purpose, the motor 21 with the highest rated torque must be disengaged to avoid problems caused by overheating and splashing of the oil which occur in known transmissions with two hydrostatic motors.

Therefore, oil is delivered to the chamber 52 through the duct 51 to determine disengagement of the clutch housing 25 from the first internal sleeve 36, or disengagement between the radial extension 39, the conical friction sectors 40 and the wedge-shaped end 43 of the second sleeve 41.

The oil entering the chamber 52 causes the piston 53 to move backwards, thus disengaging the wedge-shaped extension 43 from the conical sectors 40. The radial extension 39 of the first sleeve 36 and the conical sectors 40 would tend to remain wedged and engaged on the clutch housing 25 both due to friction between the parts and due to friction generated by the centrifugal force created by rotation of the sectors and the sleeve 36 engaged with these.

When the piston 53 moves back it causes engagement through friction between the friction ring 61 incorporated with the piston 53 and the surface 62 derived on the flanged portion 63 of the second sleeve 41. There is deceleration of the sleeves with braking of both sleeves 41 and 36 until rotation is halted.

The presence of the springs 30 fitted in the blind seats 29 determines a thrust on the gear rim 31 that pushes the spring ring 32 to move into the annular recess 33 and be positioned there loosely.

In this way the conical friction sectors 40 are obliged to detach from the annular radial extension 39 of the conical portion of the sleeve 36 and the parts are immediately disengaged.

The motor 21 thus does not transmit rotation movement to the shaft 17 and to the relevant gear 15 and is braked by the friction components. In this disengaged position there is no contact or relevant rubbing between the parts and hence the resistances of the friction clutch are completely eliminated. Therefore, only the motor 20 remains in transmission with direct transmission.

The entire flow rate of the oil can thus be applied to the motor 20 which can rotate at a higher speed and it is thus possible to obtain the highest possible operating speed for movement of the industrial vehicle.

Deactivation of the oil supply in the duct 51 and compression of the springs 44 bring the piston 53 to close against the undercut 54 of the portion 50a of the casing 50. The chamber 52 empties and the second sleeve 41 advances again to engage its wedge-shaped end 43 on the sectors 40, which in turn are engaged on the extension 39 of the clutch housing 35. All this overcoming the elastic force of the springs 30 which are again compressed in the seats 29 by the action of the spring ring 32 and the gear rim 31. It is then possible to start operating again with both the motors 20 and 21 active.

In this manner the technical problem has been solved related to transmissions with two hydrostatic control motors known to date in which the transfer speed was limited by the incoming capacity divided between the two motors and by the resistances caused by the presence of oil in any disengaging friction, or by the resistances caused by idle dragging in the neutral position of the motor with the highest maximum torque.

## Claims

1. Transmission for industrial vehicles with two hydrostatic control motors comprising a load-bearing structure (11), fitted in which is an output shaft (13) supported centrally (12), anchored to which is a central control gear (14) to control the entire input assembly towards at least one engine axle, where engaged to the said central gear (14) are two gears (15, 16), controlled by two hydrostatic motors (20, 21), a first motor (21) with higher rated torque than that of a second motor (20), also provided with between the said motor with higher rated torque (21) and a relevant gear (15) engaged on the central gear (14) a transmission assembly (22) equipped with a dry friction clutch that can be operated by means of an actuator (52, 53) to take the said motor (21) from an engaged position in transmission to a disengaged position in which idle rotation of the said gear (15) is possible on the said central gear (14), **characterised in that** the said friction clutch being connected with elastic components (30) to guarantee disengagement of the said motor (21) from the said gear (15) and
**in that** the said friction clutch of the said transmission assembly (22) comprises a first and a second sleeve (36, 41) coaxial with one another, the first sleeve (36) engaged with a shaft (24) of the said motor (21) and the second (41) sliding axially but without rotating in relation to the first sleeve (36) and which can be moved through engagement with conical friction sectors (40), which are in turn engaged with a clutch housing (25) incorporated with the said gear (15) which rotates with the said central control gear (14), as it is provided with an actuator (52, 53) to establish sliding of the said second sleeve component (41) in relation to the said first sleeve (36).

2. Transmission as claimed in claim 1, **characterised in that** the said elastic components (30) are fitted between the said clutch housing (25) and conical friction sectors (40) interacting with a conical surface of the radial extension (39) of the said first sleeve (36).

3. Transmission as claimed in claim 2, **characterised in that** the said elastic components (30) are fitted in blind seats (29) of the said clutch housing (25) and engage on a gear rim (31) held in place by a spring ring (32) positioned in an annular recess (33) derived in a cylindrical internal surface (34) of the said clutch housing (25).

4. Transmission as claimed in claim 3, **characterised in that** the said spring ring (32) is positioned loose in the said annular recess (33).

5. Transmission as claimed in claim 1, **characterised in that** the said first sleeve (36) is established to engage with the said clutch housing (25) by means of springs (44) fitted inside seats (45) derived at its end facing the said motor (21).

6. Transmission as claimed in claim 1, **characterised in that** the said actuator (52, 53) is fitted in one of its ends facing the said second sleeve (41) a friction component (61) for braking the motor (21) . 6

7. Transmission as claimed in claim 6, **characterised in that** the said second sleeve (41) also has a friction component (64) to engage on the said friction component (61) of the said actuator (52, 53).

## Patentansprüche

1. Getriebe für Nutzfahrzeuge mit zwei hydrostatischen Steuerungs- bzw. Regelungsmotoren, mit: einer Last tragenden Struktur (11), in welcher eine Antriebswelle zentral (12) gelagert ist, an welcher ein zentrales Steuerungszahnrad (14) verankert ist, um die gesamte Antriebsanordnung zu mindestens einer Maschinenachse hin zu steuern, wobei zwei Zahnräder (15, 16) mit dem zentralen Zahnrad (14) in Eingriff sind, gesteuert durch zwei hydrostatische Motoren (20, 21), einen ersten Motor (21) mit einem höheren Nenndrehmoment als dasjenige des zweiten Motors (20), ebenfalls versehen mit einer Übertragungsanordnung (22) zwischen dem Motor mit dem höheren Nenndrehmoment (21) und einem relevanten Zahnrad (15), das mit dem zentralen Zahnrad (14) in Eingriff ist, welche ausgestattet ist mit einer Trocken-Reibungskupplung, die mittels eines Betätigungselements (52, 53) betätigt werden kann, um den Motor (21) von einer Eingriffsposition in Übertragung zu einer Position außer Eingriff zu bringen, in welcher ein Leerlauf des Zahnrads (15) an dem zentralen Zahnrad (14) möglich ist, **dadurch gekennzeichnet, dass** die Reibungskupplung mit elastischen Komponenten (30) verbunden ist, um ein Lösen des Motors (21) von dem Zahnrad (15) sicher zu stellen, und dadurch, dass die Reibungskupplung der Übertragungsanordnung (22) eine erste und eine zweite Buchse (36, 41) umfasst, die koaxial zueinander liegen, wobei die erste Buchse (36) mit einer Welle (24) des Motors (21) im Eingriff ist und die zweite (41) axial aber ohne Drehung gegenüber der ersten Buchse (36) gleitet, und welche durch Eingriff mit konischen Reibungsabschnitten (40) bewegt werden können, welche wiederum mit einem Kupplungsgehäuse (25) in Eingriff sind, das in dem Zahnrad (15) inkorporiert ist, welches sich mit dem zentralen Steuerungszahnrad (14) dreht, da es mit einem Betätigungselement (52, 53) versehen ist; um ein Gleiten der zweiten Buchsenkomponente (41) gegenüber der ersten Buchse (36) zu bewirken.

2. Getriebe nach Anspruch 1, **dadurch gekennzeichnet, dass** die elastischen Komponenten (30) zwischen dem Kupplungsgehäuse (25) und konischen Reibungsabschnitten (40) angebracht sind, die mit einer konischen Oberfläche des radialen Vorsprungs (39) der ersten Buchse (36) interagieren.

3. Getriebe nach Anspruch 2, **dadurch gekennzeichnet, dass** die elastischen Komponenten (30) in Blindsitzen (29) des Kupplungsgehäuses (25) angebracht sind und mit einem Zahnkranz (31) in Eingriff treten, der durch einen Federring (32) an seinem Platz gehalten wird, welcher in einer ringförmigen Ausnehmung (33) positioniert ist, welche in einer zylindrischen Innenoberfläche (34) des Kupplungsgehäuses (25) gewonnen wird.

4. Getriebe nach Anspruch 3, **dadurch gekennzeichnet, dass** der Federring (32) lose in der ringförmigen Ausnehmung (33) positioniert ist.

5. Getriebe nach Anspruch 1, **dadurch gekennzeichnet, dass** die erste Buchse (36) so eingerichtet wird, dass sie mit dem Kupplungsgehäuse (25) mittels Federn (44) in Eingriff kommt, welche in Sitzen (45) angebracht sind, die an dessen Ende gebildet werden, welches dem Motor (21) zugewandt ist.

6. Getriebe nach Anspruch 1, **dadurch gekennzeichnet, dass** an dem Betätigungselement (52, 53) an einem seiner Enden, das der zweiten Buchse (41) zugewandt ist, eine Reibungskomponente (61) angesetzt ist, um den Motor (21) zu bremsen.

7. Getriebe nach Anspruch 6, **dadurch gekennzeichnet, dass** die zweite Buchse (41) ebenfalls eine Reibungskomponente (64) aufweist, die mit der Reibungskomponente (61) des Betätigungselements (52, 53) in Eingriff kommt.

## Revendications

1. Transmission pour véhicules industriels à deux moteurs de commande hydrostatiques comprenant une structure de support de charge (11), dans laquelle est monté un arbre de sortie (13) supporté centralement (12), auquel est fixée une roue d'engrenage de commande centrale (14) pour commander l'assemblage d'entrée complet vers au moins un axe de moteur, où sont mises en prise avec ladite roue d'engrenage centrale (14) deux roues d'engrenage (15, 16), commandées par deux moteurs hydrostatiques (20, 21), un premier moteur (21) à couple nominal supérieur à celui d'un second moteur (20), également munie, entre ledit moteur à couple nominal supérieur (21) et une roue d'engrenage adaptée (15) en prise sur la roue d'engrenage centrale (14), d'un assemblage de transmission (22) équipé d'un embrayage à sec qui peut être actionné au moyen d'un actionneur (52, 53) pour faire passer ledit moteur (21) d'une position en prise en transmission à une position débrayée dans laquelle la rotation au ralenti de ladite roue d'engrenage (15) est possible sur ladite roue d'engrenage centrale (14),
**caractérisée en ce que** ledit embrayage est relié à des organes élastiques (30) pour garantir le débrayage dudit moteur (21) d'avec ladite roue d'engrenage (15), et
**en ce que** ledit embrayage dudit assemblage de transmission (22) comprend un premier et un second manchon (36, 41) coaxiaux entre eux, le premier manchon (36) étant en prise avec un arbre (24) dudit moteur (21) et le second (41) coulissant axialement mais sans tourner par rapport au premier manchon (36) et qui peut être déplacé via la mise en prise avec des secteurs de frottement coniques (40), qui sont eux-mêmes en prise avec un boîtier d'embrayage (25) incorporé avec ladite roue d'engrenage (15) qui tourne avec ladite roue d'engrenage de commande centrale (14), puisqu'elle est munie d'un actionneur (52, 53) pour établir le coulissement dudit second manchon (41) par rapport audit premier manchon (36).

2. Transmission selon la revendication 1, **caractérisée en ce que** lesdits organes élastiques (30) sont montés entre ledit boîtier d'embrayage (25) et des secteurs de frottement coniques (40) qui interagissent avec une surface conique du prolongement radial (39) dudit premier manchon (36).

3. Transmission selon la revendication 2, **caractérisée en ce que** lesdits organes élastiques (30) sont montés dans des sièges aveugles (29) dudit boîtier d'embrayage (25) et se mettent en prise sur un rebord (31) de roue d'engrenage tenu en place par un anneau élastique (32) positionné dans un évidement annulaire (33) réalisé dans une surface interne cylindrique (34) dudit boîtier d'embrayage (25).

4. Transmission selon la revendication 3, **caractérisée en ce que** ledit anneau élastique (32) est positionné avec jeu dans ledit évidement annulaire (33).

5. Transmission selon la revendication 1, **caractérisée en ce que** ledit premier manchon (36) est prévu pour se mettre en prise avec ledit boîtier d'embrayage (25) au moyen de ressorts (44) montés dans des sièges (45) réalisés à son extrémité faisant face audit moteur (21).

6. Transmission selon la revendication 1, **caractérisée en ce que**, dans ledit actionneur (52, 53), dans l'une de ses extrémités faisant face audit second manchon (41), est monté un organe de frottement (61) pour freiner le moteur (21).

7. Transmission selon la revendication 6, **caractérisée en ce que** ledit second manchon (41) a aussi un organe de frottement (64) pour se mettre en prise avec ledit organe de frottement (61) dudit actionneur (52, 53).
